# FASCICULE DE BREVET EUROPEEN

(11) **EP 3 227 575 B1**
(45) Date de publication et mention de la délivrance du brevet: **13.01.2021**
(21) Numéro de dépôt: 15808111.7
(22) Date de dépôt: 03.12.2015
(51) Int. Cl.: F16C 25/08, F16C 13/02

(54) **PALIER, GROUPE DE TRANSFORMATION D'UN SUPPORT PLAN, ET PROCEDES DE MONTAGE ET DEMONTAGE D'UN OUTIL ROTATIF**
LAGER, WALZEINRICHTUNG ZUM UMFORMEN EINES EBENEN WALZGUTS UND MONTAGE- UND DEMONTAGEVERFAHREN EINES WALZWERKZEUGS
BEARING, UNIT FOR TRANSFORMING A PLANAR SUBSTRATE, AND METHODS FOR MOUNTING AND REMOVING A ROTARY TOOL

(30) Priorité: 04.12.2014 EP 14020101
(43) Date de publication de la demande: 11.10.2017
(73) Titulaire: BOBST MEX SA, 1031 Mex (CH)
(72) Inventeur: BEGUIN, Boris, 1817 Brent (CH); CLEMENT, Philippe, 1305 Penthalaz (CH); GAVIN, Mathieu, 1070 Puidoux (CH)
(74) Mandataire: Navarro, Asa Maria Thérèse
(86) Numéro de dépôt international: PCT/EP2015/025093
(87) Numéro de publication internationale: WO 2016/087052

(56) Documents cités:
- DE-A1- 2 214 314
- DE-A1- 2 750 530
- GB-A- 174 942
- US-A- 4 226 150

## Description

La présente invention concerne un palier de maintien d'un outil rotatif de transformation. L'invention se rapporte à un groupe de transformation d'un support plan comprenant au moins un palier de maintien. L'invention concerne également un procédé de montage et un procédé de démontage d'au moins un outil rotatif de transformation dans un palier de maintien.

Une machine de transformation de support est destinée à la fabrication d'emballages. Dans cette machine, un support plan initial, tel qu'une bande continue de carton, est déroulé et imprimé par une station d'impression comprenant un ou plusieurs groupes imprimeurs. Le support plan est ensuite transféré dans un groupe d'introduction, puis dans un groupe de gaufrage, éventuellement suivi par un groupe de refoulage. Le support plan est ensuite découpé dans un groupe de découpe. Après éjection des zones de déchets, les poses obtenues sont sectionnées pour obtenir des boîtes individualisées.

Les groupes rotatifs de transformation, de gaufrage, refoulage, découpe, éjection des déchets, ou imprimeur, comportent respectivement un outil supérieur cylindrique de transformation, et un outil inférieur cylindrique de transformation, entre lesquels circule le support plan pour être transformé. En fonctionnement, les outils rotatifs de transformation tournent à la même vitesse, mais en sens inverse l'un de l'autre. Le support plan passe dans l'interstice situé entre les outils rotatifs qui façonnent un relief par gaufrage, façonnent un relief par refoulage, découpent le support plan en poses en découpe rotative, éjectent des déchets, ou qui impriment un motif lors de l'impression.

Les extrémités des outils rotatifs sont entraînées en rotation par des systèmes motorisés et sont soutenues par des paliers munis de roulements. Le réglage des jeux de fonctionnement entre les paliers et les extrémités des outils rotatifs peut s'avérer délicat. En effet, dans le cas de jeux trop faibles, les montages et démontages des outils rotatifs peuvent risquer d'endommager les outils rotatifs. A l'inverse, dans le cas où les extrémités ne sont pas suffisamment serrées, les outils rotatifs peuvent bouger alors qu'ils doivent être fermement maintenus parallèlement l'un par rapport à l'autre pour le bon déroulement des opérations de transformation. GB 174 942 A divulgue un bloc palier de maintien de laminoir selon le préambule de la revendication 1, le bloc palier présentant trois roulements dont le roulement central est agencé de manière excentrée dans le bloc palier.

### Exposé de l'invention

Un but de la présente invention est donc de proposer un palier, un groupe de transformation, un procédé de montage et un procédé de démontage d'un outil rotatif, qui résolvent au moins en partie les inconvénients de l'état de la technique.

A cet effet, la présente invention a pour objet un palier de maintien d'un outil rotatif de transformation, comprenant deux dispositifs à roulement d'extrémité, au moins un dispositif à roulement intermédiaire interposé entre les deux dispositifs à roulement d'extrémité, les deux dispositifs à roulement d'extrémité et le dispositif à roulement intermédiaire étant destinés à coopérer avec une extrémité de l'outil rotatif de transformation, et au moins un actionneur mécanique configuré pour exercer une force de précharge radiale, linéaire et présentant une direction constante, au niveau du dispositif à roulement intermédiaire.

La force de précharge radiale exercée au niveau du dispositif à roulement intermédiaire s'oppose aux forces de réaction radiales des dispositifs à roulement d'extrémité. Ceci resserre les dispositifs à roulement sur l'extrémité de l'outil rotatif, de façon à ce que le montage présente un jeu nul ou quasiment nul entre le palier de maintien et l'extrémité de l'outil rotatif. Le rattrapage des jeux ainsi réalisé permet aux paliers d'assurer le maintien des outils rotatifs avec un positionnement relatif précis et une rigidité de maintien performante.

L'actionneur mécanique peut être configuré pour exercer une force de précharge radiale au niveau d'une bague externe du dispositif à roulement intermédiaire. Plus précisément, l'actionneur mécanique peut être configuré pour déplacer radialement une bague externe du dispositif à roulement intermédiaire.

Selon un exemple de réalisation, l'actionneur mécanique comporte un élément de commande configuré pour activer et désactiver l'application de la force de précharge radiale. Ainsi, l'exercice de la force de précharge radiale peut être désactivé lors des phases de maintenance, pour faciliter le démontage et montage des outils rotatifs.

L'actionneur mécanique peut comporter tout type d'actionneur mécanique, tel qu'un actionneur mécanique à ressort ou à vis. Selon un exemple de réalisation, l'actionneur mécanique comporte un vérin, tel qu'un vérin hydraulique, électrique ou pneumatique. Le vérin comporte par exemple une chambre et un piston dont une première extrémité est mobile dans la chambre dans une direction radiale à une bague externe du dispositif à roulement intermédiaire et dont une deuxième extrémité est fixée au dispositif à roulement intermédiaire.

Selon un exemple de réalisation, les dispositifs à roulement comportent respectivement une surface interne et une bague externe. Au moins une surface interne d'un dispositif à roulement est formée par la surface externe de l'extrémité de l'outil rotatif.

L'invention a aussi pour objet un groupe de transformation d'un support plan, tel qu'un groupe de refoulage, de gaufrage, de découpe rotative, d'éjection des déchets, ou un groupe imprimeur, destiné à comporter un outil rotatif de transformation supérieur et un outil rotatif de transformation inférieur, l'outil rotatif de transformation supérieur et l'outil rotatif de transformation inférieur étant agencés l'un au-dessus de l'autre, le groupe de transformation comprenant au moins un palier de maintien d'un outil rotatif de transformation tel que décrit et revendiqué ci-dessous.

Selon un exemple de réalisation, le groupe de transformation comprend:
- un palier de maintien, destiné à coopérer avec une extrémité de l'outil rotatif supérieur, et dont l'actionneur mécanique est configuré pour déplacer le dispositif à roulement intermédiaire vers le haut, et
- un palier de maintien, destiné à coopérer avec une extrémité de l'outil rotatif inférieur, et dont l'actionneur mécanique est configuré pour déplacer le dispositif à roulement intermédiaire vers le bas.

Le jeu vertical entre les paliers et les extrémités des outils rotatifs dans la direction des efforts exercés sur le groupe de transformation est ainsi réduit.

L'invention a aussi pour objet un procédé de montage d'un outil rotatif de transformation dans un palier de maintien d'un outil rotatif de transformation, qui comprend les étapes consistant à:
- insérer les extrémités des outils rotatifs de transformation dans les paliers de maintien, puis
- exercer une force de précharge radiale, linéaire et présentant une direction constante, au niveau du dispositif à roulement intermédiaire interposé entre les dispositifs à roulement d'extrémité.

L'invention a encore pour objet un procédé de démontage d'un outil rotatif de transformation dans un palier de maintien d'un outil rotatif de transformation, qui comprend les étapes consistant à:
- désactiver l'application d'une force de précharge radiale , linéaire et présentant une direction constante, au niveau du dispositif à roulement intermédiaire interposé entre les dispositifs à roulement d'extrémité, et
- faire sortir les extrémités des outils rotatifs de transformation des paliers de maintien.

### Brève description des dessins

D'autres avantages et caractéristiques apparaîtront à la lecture de la description de l'invention, ainsi que sur les figures annexées qui représentent un exemple de réalisation non limitatif de l'invention, et sur lesquelles:
- la Figure 1 est une vue générale d'un exemple de ligne de transformation d'un support plan;
- la Figure 2 représente une vue en perspective d'un outil rotatif supérieur et d'un outil rotatif inférieur;
- la Figure 3 représente une vue en coupe verticale d'éléments d'un groupe de transformation selon un premier exemple de réalisation;

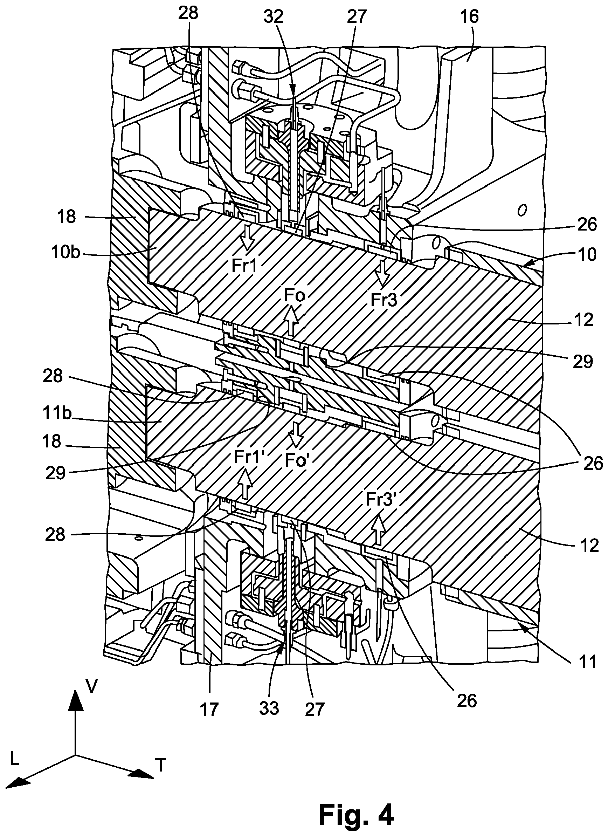

- la Figure 4 est une vue agrandie du groupe de transformation de la Figure 3 montrant des paliers et des extrémités d'outils rotatifs;
- la Figure 5 représente une vue en coupe verticale d'un palier d'un groupe de transformation selon un deuxième exemple de réalisation;
- la Figure 6 représente une vue analogue à la Figure 5 dans laquelle une extrémité d'outil rotatif s'engage dans une bague externe d'un dispositif à roulement d'extrémité du palier;
- la Figure 7 représente une vue analogue et successive à la Figure 6 dans laquelle l'extrémité de l'outil rotatif s'engage dans la bague externe du dispositif à roulement intermédiaire;
- la Figure 8 représente une vue analogue et successive à la Figure 7 dans laquelle l'extrémité de l'outil rotatif est complètement engagée dans les trois bagues externes des dispositifs à roulement du palier; et
- la Figure 9 représente une vue en coupe verticale selon le plan IX - IX de la Figure 8.

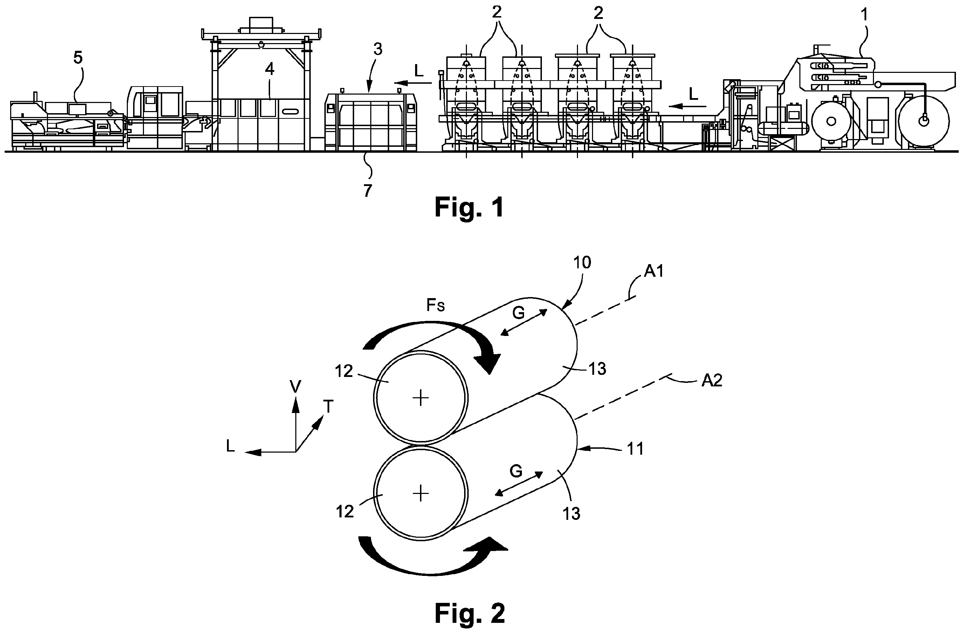

Les directions longitudinale, verticale et transversale indiquées sur la Fig. 2 sont définies par le trièdre L, V, T. La direction transversale T est la direction perpendiculaire à la direction de déplacement longitudinale L du support plan. Le plan horizontal correspond au plan L, T. Les positions avant et arrière sont définies par rapport à la direction transversale T, comme étant respectivement le côté conducteur et le côté opposé conducteur.

### Exposé détaillé des formes de réalisation préférées

Une ligne de transformation d'un support plan, tel que du carton plat ou du papier en bande continue enroulé en bobine, permet de réaliser différentes opérations et d'obtenir des d'emballages comme des boîtes pliantes. Comme le représente la Fig. 1, la ligne de transformation comprend, disposée l'une à la suite de l'autre dans l'ordre de défilement du support plan, une station dérouleur 1, plusieurs groupes imprimeurs 2, un ou plusieurs groupes de gaufrage en série suivis d'un ou plusieurs groupes de refoulage en série 3, suivie d'un groupe de découpe rotative 4 ou de découpe à platine, et une station de réception 5 des objets confectionnés.

Le groupe de transformation 7 comprend un outil rotatif supérieur 10 et un outil rotatif inférieur 11, qui modifient le support plan par impression, gaufrage, refoulage, découpe, éjection des déchets, etc., en vue d'obtenir un emballage.

Les outils rotatifs 10 et 11, sont montés parallèlement l'un par rapport à l'autre dans le groupe de transformation 7, l'un au-dessus de l'autre, et s'étendent selon la direction transversale T, qui est aussi la direction des axes de rotation A1 et A2 des outils rotatifs 10 et 11 (voir Fig. 2). Les extrémités arrière des outils rotatifs 10 et 11, côté opposé conducteur, sont entraînées en rotation par des moyens d'entraînement motorisés. En fonctionnement, les outils rotatifs 10 et 11 tournent dans des sens opposés autour de chacun des axes de rotation A1 et A2 (Flèches Fs et Fi). Le support plan passe dans l'interstice situé entre les outils rotatifs 10 et 11, pour y être gaufré, et/ou refoulé, et/ou découpé, et/ou imprimé.

Au moins un des deux outils rotatifs, l'outil rotatif supérieur 10 ou l'outil rotatif inférieur 11, peut comporter un mandrin 12 et un manchon amovible 13, insérable sur le mandrin 12 dans la direction transversale T (Fig. 2, Flèche G). Ainsi, lorsqu'un opérateur souhaite changer les outils rotatifs 10 et 11, il suffit de changer les manchons 13 plutôt que la totalité de l'outil rotatif 10 et 11. La manipulation du manchon 13 étant facilitée par son faible poids relativement à celui de l'outil rotatif 10 et 11 complet, le changement de travail peut être effectué rapidement. En outre, les manchons 13 sont peu coûteux comparés au prix de l'outil rotatif 10 et 11 complet. Il est donc avantageux d'utiliser un même mandrin 12 en combinaison avec plusieurs manchons 13, plutôt que de prévoir l'acquisition de plusieurs outils rotatifs 10 et 11 complets.

Le groupe de transformation 7 comporte au moins un palier 14, 15, 16 et 17 destiné à coopérer avec une extrémité 10a, 10b, 11a, 11b d'un outil rotatif 10, 11, pour le maintenir en permettant sa rotation. Plus précisément, le groupe de transformation 7 comporte quatre paliers. Un palier supérieur avant 14 est destiné à coopérer avec une extrémité avant 10a de l'outil rotatif supérieur 10. Un palier inférieur avant 15 est destiné à coopérer avec l'extrémité avant 11a de l'outil rotatif inférieur 11. Un palier 16 supérieur arrière est destiné à coopérer avec l'extrémité arrière 10b de l'outil rotatif supérieur 10. Et un palier inférieur arrière 17 est destiné à coopérer avec l'extrémité arrière 11b de l'outil rotatif inférieur 11. Les paliers 14, 15, 16, 17 sont montés deux à deux verticalement l'un au-dessus de l'autre dans un montant porte-outil 23 respectif du groupe de transformation 7.

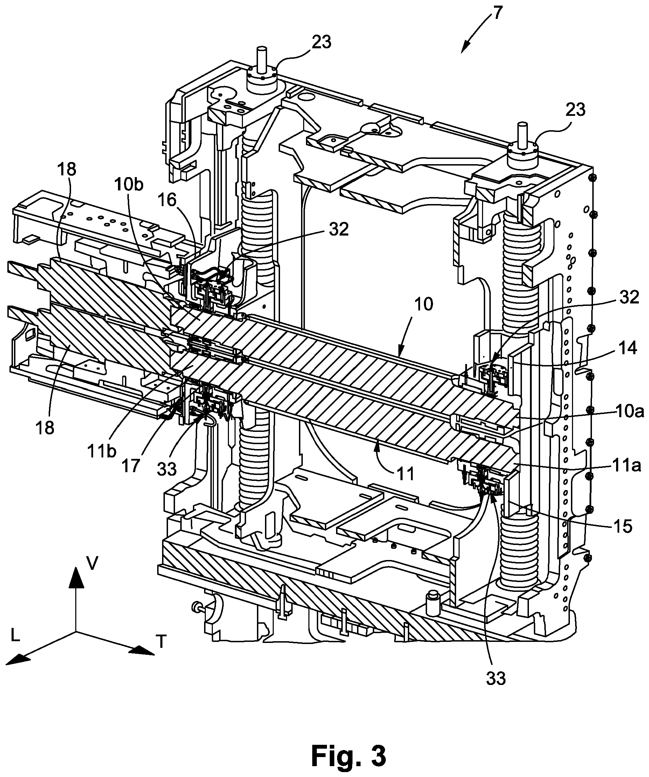

Chaque palier 14, 15, 16 et 17 comporte deux dispositifs à roulement d'extrémité 26 et 28 et un dispositif à roulement intermédiaire 27 interposé entre les dispositifs à roulement d'extrémité 26, 28 (voir Fig. 3), les dispositifs à roulement 26, 27 et 28 étant destinés à coopérer avec une extrémité 10a, 10b, 11a, 11b d'un outil rotatif 10, 11. Les dispositifs à roulement 26, 27 et 28 sont agencés coaxialement dans la direction transversale T, les uns à la suite des autres.

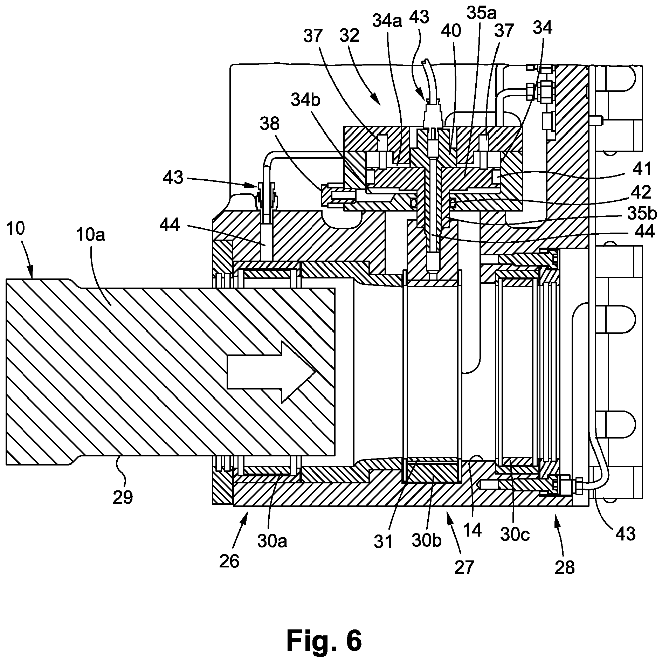

Les dispositifs à roulement 26, 27 et 28 comportent par exemple respectivement une surface interne et une bague externe 30a, 30b, 30c entre lesquelles sont placées des éléments roulants, tels que des aiguilles 31. En outre, au moins une surface interne d'un dispositif à roulement 26, 27, 28 est formée par la surface externe 29 de l'extrémité 10a, 10b, 11a, 11b, de l'outil rotatif 10, 11. Par exemple, la surface externe 29 des extrémités des outils rotatifs 10 et 11 forme les surfaces internes de tous les dispositifs à roulement 26, 27 et 28 (mieux visible sur les Figs. 6 à 9).

Chaque palier 14, 15, 16, 17 comporte en outre un actionneur mécanique 32, 33 respectif configuré pour exercer une force de précharge radiale Fo, Fo' au niveau du dispositif à roulement intermédiaire 27, interposé entre les dispositifs à roulement d'extrémité 26 et 28. L'actionneur mécanique 32, 33 est par exemple configuré pour exercer une force de précharge radiale Fo, Fo' sur la bague externe 30b du dispositif à roulement intermédiaire 27. Plus précisément, l'actionneur mécanique 32, 33 peut être configuré pour déplacer radialement la bague externe 30b du dispositif à roulement intermédiaire 27. A titre d'exemple, tirer le dispositif à roulement intermédiaire 27 avec l'actionneur mécanique 32, 33 permet de transmettre l'effort de précharge au palier 14, 15, 16 et 17 du groupe de transformation 7. La force de précharge radiale Fo, Fo' est ainsi linéaire et présente une direction constante.

La force de précharge radiale Fo, Fo' exercée au niveau du dispositif à roulement intermédiaire 27 s'oppose aux forces de réaction radiales du travail de transformation Fr1, Fr3, Fr1', Fr3' des dispositifs à roulement d'extrémité 26, 28, ce qui resserre les dispositifs à roulement 26, 27, 28 sur l'extrémité 10a, 10b, 11a, 11b respective de l'outil rotatif 10, 11 de manière que le montage présente un jeu nul ou quasiment nul entre le palier 14, 15, 16, 17 et l'extrémité 10a, 10b, 11a, 11b. Le rattrapage des jeux ainsi réalisé permet aux paliers 14, 15, 16 et 17 d'assurer le maintien des outils rotatifs 10, 11 avec un positionnement relatif précis et une rigidité de maintien performante.

Selon un exemple de réalisation, les paliers 14, 16 destinés à coopérer avec les extrémités 10a, 10b de l'outil rotatif supérieur 10 sont munis d'un actionneur mécanique 32 respectif configuré pour déplacer le dispositif à roulement intermédiaire 27 respectif vers le haut. En correspondance, les paliers 15, 17 destinés à coopérer avec les extrémités 11a, 11b de l'outil rotatif inférieur 11 sont munis d'un actionneur mécanique 33 respectif, configuré pour déplacer le dispositif à roulement intermédiaire 27 respectif vers le bas. La réduction du jeu vertical entre les paliers 14, 15, 16, 17 et les extrémités des outils rotatifs 10, 11 dans la direction des efforts exercés sur le groupe de transformation est assurée ainsi.

En outre, l'actionneur mécanique 32, 33 peut comporter un élément de commande configuré pour activer et désactiver l'exercice de la force de précharge radiale Fo, Fo'. A l'état désactivé, c'est-à-dire lorsqu'aucune force de précharge radiale Fo, Fo' n'est exercée au niveau du dispositif à roulement intermédiaire 27, les dispositifs à roulement 26, 27, 28 sont alignés coaxialement suivant l'axe de rotation des outils rotatifs 10, 11. Il est ainsi possible de désactiver la force de précharge radiale lors des phases de maintenance pour faciliter le démontage et montage des outils rotatifs 10, 11.

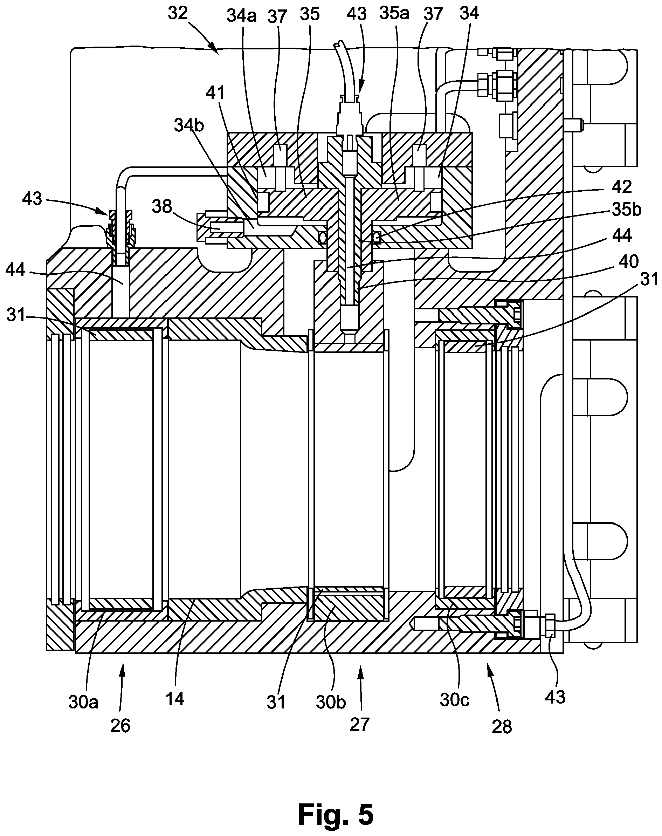

L'actionneur mécanique peut comporter tout type d'actionneur mécanique, tel qu'un actionneur mécanique à ressort ou à vis. Selon un exemple de réalisation représenté sur les Figs. 5 à 9, les actionneurs mécaniques 32, 33 comportent un vérin, tel qu'un vérin hydraulique. Le vérin comporte par exemple une chambre 34 en forme cylindrique et un piston 35 dont une première extrémité 35a est mobile dans la chambre 34 dans une direction radiale à la bague externe 30b du dispositif à roulement intermédiaire 27 et dont une deuxième extrémité 35b est fixée au dispositif à roulement intermédiaire 27.

La première extrémité du piston 35a sépare ainsi la chambre 34 en un premier et deuxième volumes 34a, 34b isolés l'un de l'autre. Un orifice 38 permettant d'introduire ou d'évacuer un fluide pour déplacer le piston 35, est ménagé dans le deuxième volume 34b. Le vérin comporte en outre au moins un organe de rappel élastique 37, tel qu'un ressort de compression, interposé entre le piston 35 et la première chambre 34a et sollicitant le piston 35 en poussée.

La première extrémité du piston 35a présente par exemple une forme de disque complémentaire à la forme cylindrique de la chambre 34. La deuxième extrémité du piston 35b présente par exemple une forme de tige et est fixée à la bague externe 30b pour transmettre l'effort de précharge radiale au dispositif à roulement intermédiaire 27.

La deuxième extrémité du piston 35b est par exemple fixée à la bague externe 30b au moyen d'une vis 40 du palier 14, 15, 16, 17, traversant le piston 35. Une première extrémité de la vis 40 est fixée dans la bague externe 30b et une deuxième extrémité de la vis 40 présente une tête coopérant avec la première extrémité du piston 35a dans le premier volume 34a. La bague externe 30b présente par exemple une excroissance radiale permettant la fixation de la première extrémité de la vis 40.

En outre, le piston 35 comporte par exemple un premier joint d'étanchéité 41 interposé entre la première extrémité du piston 35a et la chambre 34. Le premier joint d'étanchéité 41 est par exemple annulaire et agencé autour de la première extrémité du piston 35a. Le piston 35 comporte un deuxième joint d'étanchéité 42 interposé entre la deuxième extrémité du piston 35b et la chambre 34. Le deuxième joint d'étanchéité 42 est par exemple annulaire et agencé autour de la deuxième extrémité du piston 35b. Le fluide contenu dans le deuxième volume 34b peut ainsi être isolé de manière étanche.

Le piston 35 est ainsi mobile entre une position de repos dans laquelle aucune force de précharge radiale n'est exercée et une position active dans laquelle le piston 35 déplace la bague externe 30b du dispositif à roulement intermédiaire 27. L'injection d'un fluide sous pression dans le deuxième volume 34b de la chambre 34 à travers l'orifice 38 pousse le piston 35 à l'encontre de l'organe de rappel élastique 37, déplaçant la bague externe 30b. La commande de l'injection et de l'évacuation du fluide commande ainsi l'exercice de la force de précharge radiale Fo.

Le palier peut également être prévu avec des moyens de lubrification 43 des dispositifs à roulement 26, 27, 28. Les moyens de lubrification 43 comprennent par exemple un conduit 44 ménagé dans le palier 14, 15, 16 et 17, raccordé d'une part à une alimentation de lubrifiant et raccordant d'autre part chaque dispositif à roulement 26, 27, 28, pour leur graissage. Pour le dispositif à roulement intermédiaire 27, le conduit 44 traverse par exemple l'actionneur mécanique 32, 33. Par exemple, et comme visible sur la Fig. 5, le conduit 44 du moyen de lubrification 43 traverse la vis 40 fixant le piston 35 à la bague externe 30b, et débouche par exemple de la bague externe 30b au niveau des éléments roulants 31.

Dans l'état initial du groupe de transformation 7 (Fig. 5), le palier est dépourvu d'outil rotatif. L'exercice de la force de précharge radiale Fo par l'actionneur mécanique 32 est désactivé et les dispositifs à roulement 26, 27, 28 sont coaxialement alignés, ce qui permet l'introduction de l'extrémité 10a, d'un outil rotatif 10.

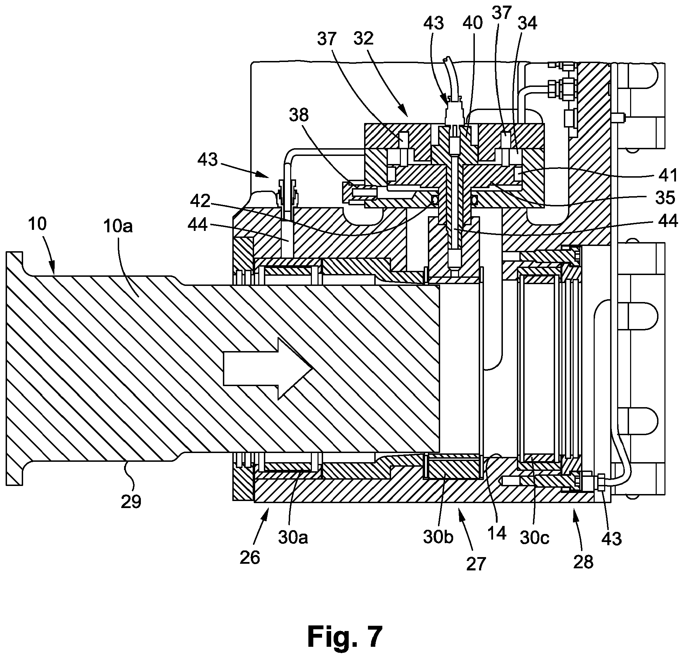

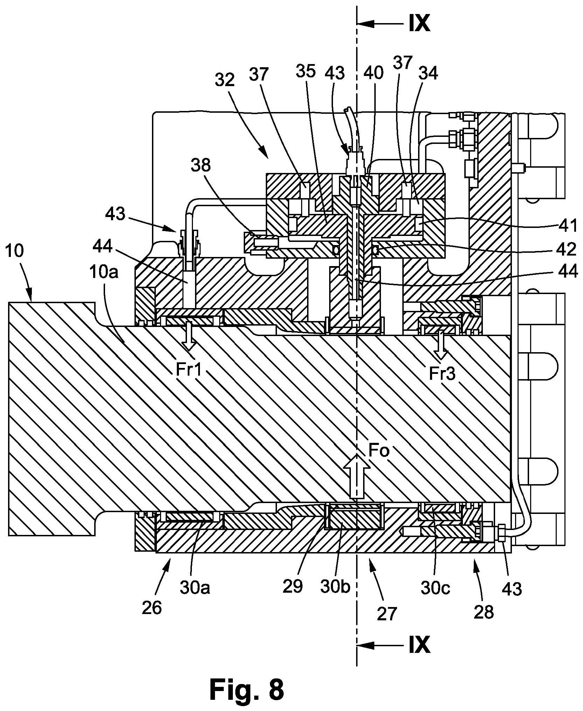

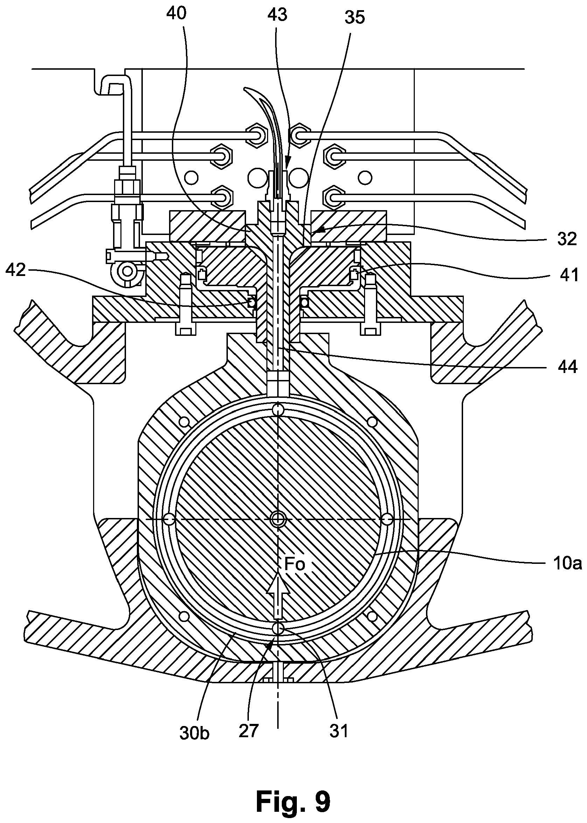

L'extrémité 10a est d'abord insérée dans la bague externe 30a du dispositif à roulement d'extrémité 26 (Fig. 6), puis successivement dans le dispositif à roulement intermédiaire 27 (Fig. 7) et enfin dans tous les dispositifs à roulement 26, 27, 28 (Figs. 8 et 9). Une fois l'extrémité 10a de l'outil rotatif 10 complètement engagée dans le palier supérieur avant 14, une force de précharge radiale Fo est exercée, en injectant un fluide sous pression à travers l'orifice 38 du deuxième volume 34b de la chambre 34. Le piston 35 remonte alors verticalement dans la chambre 34, déplaçant la bague externe 30b du dispositif à roulement intermédiaire 27 vers le haut.

L'orientation de la force de précharge radiale Fo ainsi exercée au niveau du dispositif à roulement intermédiaire 27 par l'actionneur mécanique 32 s'oppose aux forces de réaction radiales du travail de transformation Fr1, Fr3 des dispositifs à roulement d'extrémité 26, 28, ce qui resserre les dispositifs à roulement 26, 27, 28 sur l'extrémité 10a de l'outil rotatif 10 de manière que le montage présente un jeu nul ou quasiment nul entre le palier supérieur avant 14 et l'extrémité 10a. Le rattrapage des jeux ainsi réalisé permet au palier supérieur avant 14 d'assurer le maintien de l'outil rotatif 10 avec un positionnement précis de l'outil rotatif et une rigidité de maintien performante.

Pour le démontage, l'application de la force de précharge radiale Fo est désactivée en stoppant l'injection de fluide, avant de démonter les extrémités des outils rotatifs 10, 11 des paliers 14, 15, 16, 17. Les forces de précharge radiale Fo, Fo' peuvent ainsi être désactivée lors des phases de maintenance ou de changement de travail, pour faciliter le démontage et montage des outils rotatifs 10, 11.

La présente invention n'est pas limitée aux modes de réalisation décrits et illustrés. De nombreuses modifications peuvent être réalisées, sans sortir du cadre défini par le jeu de revendications.

## Revendications

1. Palier de maintien d'un outil rotatif de transformation (10, 11), comprenant deux dispositifs à roulement d'extrémité (26, 28), au moins un dispositif à roulement intermédiaire (27) interposé entre les dispositifs à roulement d'extrémité (26, 28), les dispositifs à roulement d'extrémité et intermédiaire (26, 27, 28) étant destinés à coopérer avec une extrémité (10a, 10b, 11a, 11b) de l'outil rotatif (10, 11), et au moins un actionneur mécanique (32, 33), **caractérisé en ce que** l'actionneur mécanique (32, 33) est configuré pour exercer une force de précharge radiale (Fo, Fo'), linéaire et présentant une direction constante, au niveau du dispositif à roulement intermédiaire (27).

2. Palier de maintien selon la revendication 1, dans lequel l'actionneur mécanique (32, 33) est configuré pour exercer une force de précharge radiale (Fo, Fo') sur une bague externe (30b) du dispositif à roulement intermédiaire (27).

3. Palier de maintien selon la revendication 1 ou 2, dans lequel l'actionneur mécanique (32, 33) est configuré pour déplacer radialement une bague externe (30b) du dispositif à roulement intermédiaire (27).

4. Palier de maintien selon l'une des revendications précédentes, dans lequel l'actionneur mécanique (32, 33) comporte un élément de commande configuré pour activer et désactiver l'application de la force de précharge radiale (Fo, Fo').

5. Palier de maintien selon l'une des revendications précédentes, dans lequel l'actionneur mécanique (32, 33) comporte un vérin.

6. Palier de maintien selon la revendication 5, dans lequel le vérin comporte une chambre (34) et un piston (35) dont une première extrémité (35a) est mobile dans la chambre (34) dans une direction radiale à une bague externe (30b) du dispositif à roulement intermédiaire (27), et dont une deuxième extrémité (35b) est fixée au dispositif à roulement intermédiaire (27).

7. Palier de maintien selon l'une des revendications précédentes, dans lequel les dispositifs à roulement d'extrémité et intermédiaire (26, 27, 28) comportent respectivement une surface interne et une bague externe (30a, 30b, 30c), au moins une surface interne d'un dispositif à roulement (26, 27, 28) est formée par la surface externe (29) de l'extrémité (10a, 10b, 11a, 11b) de l'outil rotatif (10, 11).

8. Groupe de transformation d'un support plan, destiné à comporter un outil rotatif supérieur (10) et un outil rotatif inférieur (11), agencés l'un au-dessus de l'autre, comprenant au moins un palier de maintien (14, 15, 16, 17) selon l'une des revendications précédentes.

9. Groupe de transformation selon la revendication 8, comprenant:
- un palier de maintien (14, 16), destiné à coopérer avec une extrémité (10a, 10b) de l'outil rotatif supérieur (10) et dont l'actionneur mécanique (32) est configuré pour déplacer le dispositif à roulement intermédiaire (27) vers le haut, et
- un palier de maintien (15, 17), destiné à coopérer avec une extrémité (11a, 11b) de l'outil rotatif inférieur (11) et dont l'actionneur mécanique (33) est configuré pour déplacer le dispositif à roulement intermédiaire (27) vers le bas.

10. Procédé de montage d'un outil rotatif (10, 11) dans un palier de maintien (14, 15, 16, 17) selon l'une des revendications 1 à 7, comprenant les étapes consistant à:
- insérer les extrémités (10a, 10b, 11a, 11b) des outils rotatifs (10, 11) dans les paliers de maintien (14, 15, 16, 17), puis
- exercer la force de précharge radiale (Fo, Fo') au niveau du dispositif à roulement intermédiaire (27) interposé entre les dispositifs à roulement d'extrémité (26, 28).

11. Procédé de démontage d'un outil rotatif (10, 11) dans un palier maintien (14, 15, 16, 17) selon l'une des revendications 1 à 7, comprenant les étapes consistant à:
- désactiver l'application de la force de précharge radiale (Fo, Fo') au niveau du dispositif à roulement intermédiaire (27) interposé entre les dispositifs à roulement d'extrémité (26, 28), et
- faire sortir les extrémités (10a, 10b, 11a, 11b) des outils rotatifs (10, 11) des paliers de maintien (14, 15, 16, 17).

## Patentansprüche

1. Haltelager eines Umformdrehwerkzeugs (10, 11), umfassend zwei Endrollenvorrichtungen (26, 28), mindestens eine Zwischenrollenvorrichtung (27), die zwischen den Endrollenvorrichtungen (26, 28) eingeschoben ist, wobei die End- und Zwischenrollenvorrichtungen (26, 27, 28) dazu bestimmt sind, mit einem Ende (10a, 10b, 11a, 11b) des Drehwerkzeugs (10, 11) zusammenzuwirken, und mindestens ein mechanisches Stellglied (32, 33), **dadurch gekennzeichnet, dass** das mechanische Stellglied (32, 33) konfiguriert ist, um eine radiale, lineare und eine konstante Richtung aufweisende Vorspannkraft (Fo, Fo') an der Zwischenrollenvorrichtung (27) auszuüben.

2. Haltelager nach Anspruch 1, wobei das mechanische Stellglied (32, 33) konfiguriert ist, um eine radiale Vorspannkraft (Fo, Fo') auf einen Außenring (30b) der Zwischenrollenvorrichtung (27) auszuüben.

3. Haltelager nach Anspruch 1 oder 2, wobei das mechanische Stellglied (32, 33) konfiguriert ist, um einen Außenring (30b) der Zwischenrollenvorrichtung (27) radial zu bewegen.

4. Haltelager nach einem der vorstehenden Ansprüche, wobei das mechanische Stellglied (32, 33) ein Steuerelement umfasst, das konfiguriert ist, um die Anwendung der radialen Vorspannkraft (Fo, Fo') zu aktivieren und zu deaktivieren.

5. Haltelager nach einem der vorstehenden Ansprüche, wobei das mechanische Stellglied (32, 33) einen Zylinder umfasst.

6. Haltelager nach Anspruch 5, wobei der Zylinder eine Kammer (34) und einen Kolben (35), dessen erstes Ende (35a) in der Kammer (34) in einer Richtung, die zu einem Außenring (30b) der Zwischenrollenvorrichtung (27) radial ist, beweglich ist, und dessen zweites Ende (35b) an der Zwischenrollenvorrichtung (27) befestigt ist, umfasst.

7. Haltelager nach einem der vorstehenden Ansprüche, wobei die End- und Zwischenrollenvorrichtungen (26, 27, 28) jeweils eine Innenfläche und einen Innenring (30a, 30b, 30c) umfassen, wobei mindestens eine Innenfläche einer Rollenvorrichtung (26, 27, 28) durch die Außenfläche (29) des Endes (10a, 10b, 11a, 11b) des Drehwerkzeugs (10, 11) gebildet wird.

8. Gruppe zum Umformen einer ebenen Unterlage, die dazu bestimmt ist, ein oberes Drehwerkzeug (10) und ein unteres Drehwerkzeug (11), die übereinander angeordnet sind, zu umfassen, umfassend mindestens ein Haltelager (14, 15, 16, 17) nach einem der vorstehenden Ansprüche.

9. Umformgruppe nach Anspruch 8, umfassend:
- ein Haltelager (14, 16) zum Zusammenwirken mit einem Ende (10a, 10b) des oberen Drehwerkzeugs (10), und dessen mechanisches Stellglied (32) konfiguriert ist, um die Zwischenrollenvorrichtung (27) nach oben zu bewegen, und
- ein Haltelager (15, 17) zum Zusammenwirken mit einem Ende (11a, 11b) des unteren Drehwerkzeugs (11), und dessen mechanisches Stellglied (33) konfiguriert ist, um die Zwischenrollenvorrichtung (27) nach unten zu bewegen.

10. Verfahren zum Einbauen eines Drehwerkzeugs (10, 11) in ein Haltelager (14, 15, 16, 17) nach einem der Ansprüche 1 à 7, umfassend folgende Schritte:
- Einsetzen der Enden (10a, 10b, 11a, 11b) der Drehwerkzeuge (10, 11) in die Haltelager (14, 15, 16, 17), anschließend
- Ausüben einer radialen Vorspannkraft (Fo, Fo') an der Zwischenrollenvorrichtung (27), die zwischen den Endrollenvorrichtungen (26, 28) eingeschoben ist.

11. Verfahren zum Ausbauen eines Drehwerkzeugs (10, 11) aus einem Haltelager (14, 15, 16, 17) nach einem der Ansprüche 1 bis 7, umfassend folgende Schritte:
- Deaktivieren der Anwendung der radialen Vorspannkraft (Fo, Fo') an der Zwischenrollenvorrichtung (27), die zwischen den Endrollenvorrichtungen (26, 28) eingeschoben ist, und
- Herausbringen der Enden (10a, 10b, 11a, 11b) der Drehwerkzeuge (10, 11) aus den Haltelagern (14, 15, 16, 17).

## Claims

1. Bearing for supporting a rotary conversion tool (10, 11) comprising two end rolling devices (26, 28), at least one intermediate rolling device (27) located between the end rolling devices (26, 28), the end and intermediate rolling devices (26, 27, 28) being configured to engage with an end (10a, 10b, 11a, 11b) of the rotary tool (10, 11), and at least one mechanical actuator (32, 33), **characterised in that** the mechanical actuator (32, 33) is configured to exert a radial preload force (Fo, Fo'), which is linear and has a constant direction, on the intermediate rolling device (27).

2. The bearing according to claim 1, wherein the mechanical actuator (32, 33) is configured to exert a radial preload force (Fo, Fo') on an outer ring (30b) of the intermediate rolling device (27).

3. The bearing according to claim 1 or 2, wherein the mechanical actuator (32, 33) is configured to radially move an outer ring (30b) of the intermediate rolling device (27).

4. The bearing according to one of the preceding claims, wherein the mechanical actuator (32, 33) comprises a control element configured to activate and deactivate the application of the radial preload force (Fo, Fo').

5. The bearing according to one of the preceding claims, wherein the mechanical actuator (32, 33) comprises a cylinder.

6. The bearing according to claim 5, wherein the cylinder comprises a chamber (34) and a piston (35), the first end (35a) of the piston being movable in the chamber (34) in a radial direction with respect to an outer ring (30b) of the intermediate rolling device (27) and the second end (35b) of the piston being attached to the intermediate rolling device (27).

7. The bearing according to one of the preceding claims, wherein the end and intermediate rolling devices (26, 27, 28) respectively comprise an inner surface and an outer ring (30a, 30b, 30c), at least one inner surface of a rolling device (26, 27, 28) is formed by the outer surface (29) of the end (10a, 10b, 11a, 11b) of the rotary tool (10, 11).

8. A conversion unit for converting a flat substrate, being configured to have an upper rotary tool (10) and a lower rotary tool (11) that are arranged one above the other, comprising at least one support bearing (14, 15, 16, 17) according to one of the preceding claims.

9. The conversion unit according to claim 8, comprising:
- a support bearing (14, 16) configured to engage with an end (10a, 10b) of the upper rotary tool (10), the mechanical actuator (32) being configured to move the intermediate rolling device (27) upward; and
- a support bearing (15, 17) is configured to engage with an end (11a, 11b) of the lower rotary tool (11), and the mechanical actuator (32) being configured to move the intermediate rolling (27) device downward.

10. A method for mounting a rotary tool (10, 11) in a support bearing (14, 15, 16, 17) according any one of claims 1 to 7, comprising the steps of:
- inserting the ends (10a, 10b, 11a, 11b) of the rotary tools (10, 11) into the support bearings (14, 15, 16, 17); and then
- exerting the radial preload force (Fo, Fo') on the intermediate rolling device (27) located between the end rolling devices (26, 28).

11. A method for removing a rotary tool (10, 11) from a support bearing (14, 15, 16, 17) according to any one of claims 1 to 7, comprising the steps of:
- deactivating the application of the radial preload force (Fo, Fo') on the intermediate rolling device (27) located between the end rolling devices (26, 28); and
- extracting the ends (10a, 10b, 11a, 11b) of the rotary tools (10, 11) from the support bearings (14, 15, 16, 17).
